(19) Europäisches Patentamt
European Patent Office
Office européen des brevets

(11) **EP 4 625 112 A1**

(12) **EUROPEAN PATENT APPLICATION**

(43) Date of publication:
**01.10.2025 Bulletin 2025/40**

(21) Application number: **25159416.4**

(22) Date of filing: **21.02.2025**

(51) International Patent Classification (IPC):
**G06F 1/3225** (2019.01)   **G06F 1/3234** (2019.01)
**G06F 1/3287** (2019.01)

(52) Cooperative Patent Classification (CPC):
**G06F 1/3225; G06F 1/3243; G06F 1/3275;**
**G06F 1/3287; G06F 12/0804; G06F 12/0811;**
G06F 2212/1028; G06F 2212/502

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **29.03.2024   US 202463572047 P**
**26.06.2024   US 202418755467**

(71) Applicant: **INTEL Corporation**
**Santa Clara, CA 95054 (US)**

(72) Inventors:
• **Weiss, Sagi**
**3050000 Binyamina (IL)**
• **Aizik, Yoni**
**31015 Haifa (IL)**
• **Babajani, Yoav**
**7528271 Rishon Le Zion (IL)**
• **Rubin, Yossi**
**2603707 Qiryat Motzkin (IL)**
• **Shitrit, Oz**
**Tel Aviv, 6233101 (US)**

(74) Representative: **Samson & Partner Patentanwälte**
**mbB**
**Widenmayerstraße 6**
**80538 München (DE)**

(54) **APPARATUS AND METHOD FOR INTELLIGENT CACHE FLUSHING TO REDUCE POWER AND IMPROVE BATTERY LIFE**

(57)   Embodiments include a cache associated with at least a first core or functional circuit block; and a power controller to evaluate at least one of energy and power consumption associated with the first core or functional circuit block remaining in an active state, entering a first sleep state, or entering a second sleep state; the power controller to evaluate the at least one of energy and power consumption based, at least in part, on energy associated with flushing the plurality of cachelines when entering into the second sleep state, an expected sleep time, and power consumption of the first core or functional circuit block in the active state, the first sleep state, and the second sleep state; the power controller to cause the first core or functional circuit block to remain active, enter into the first sleep state, or the second sleep state based on a minimum energy consumption.

FIG. 1

Description

BACKGROUND

Field of the Invention

This invention relates generally to the field of computer processors. More particularly, the invention relates to an apparatus and method for intelligent cache flushing to reduce power and improve battery life.

Description of the Related Art

An instruction set, or instruction set architecture (ISA), is the part of the computer architecture related to programming, including the native data types, instructions, register architecture, addressing modes, memory architecture, interrupt and exception handling, and external input and output (I/O). It should be noted that the term "instruction" generally refers herein to macro-instructions - that is instructions that are provided to the processor for execution - as opposed to micro-instructions or micro-ops - that is the result of a processor's decoder decoding macro-instructions. The micro-instructions or micro-ops can be configured to instruct an execution unit on the processor to perform operations to implement the logic associated with the macro-instruction.

The ISA is distinguished from the microarchitecture, which is the set of processor design techniques used to implement the instruction set. Processors with different microarchitectures can share a common instruction set. For example, Intel® Pentium 4 processors, Intel® Core™ processors, and processors from Advanced Micro Devices, Inc. of Sunnyvale CA implement nearly identical versions of the x86 instruction set (with some extensions that have been added with newer versions), but have different internal designs. For example, the same register architecture of the ISA may be implemented in different ways in different microarchitectures using well-known techniques, including dedicated physical registers, one or more dynamically allocated physical registers using a register renaming mechanism (e.g., the use of a Register Alias Table (RAT), a Reorder Buffer (ROB) and a retirement register file). Unless otherwise specified, the phrases register architecture, register file, and register are used herein to refer to that which is visible to the software/programmer and the manner in which instructions specify registers. Where a distinction is required, the adjective "logical," "architectural," or "software visible" will be used to indicate registers/files in the register architecture, while different adjectives will be used to designate registers in a given microarchitecture (e.g., physical register, reorder buffer, retirement register, register pool).

BRIEF DESCRIPTION OF THE DRAWINGS

A better understanding of the present invention can be obtained from the following detailed description in conjunction with the following drawings, in which:

FIG. 1 illustrates an example computer system architecture.
FIG. 2 illustrates a processor comprising a plurality of cores.
FIG. 3A illustrates a plurality of stages of a processing pipeline.
FIG. 3B illustrates details of one embodiment of a core.
FIG. 4 illustrates execution circuitry in accordance with one embodiment.
FIG. 5 illustrates one embodiment of a register architecture.
FIG. 6 illustrates one example of an instruction format.
FIG. 7 illustrates addressing techniques in accordance with one embodiment.
FIG. 8 illustrates one embodiment of an instruction prefix.
FIGS. 9A-D illustrate embodiments of how the R, X, and B fields of the prefix are used.
FIGS. 10A-B illustrate examples of a second instruction prefix.
FIG. 11 illustrates payload bytes of one embodiment of an instruction prefix.
FIG. 12 illustrates instruction conversion and binary translation implementations.
FIG. 13 illustrates a processor architecture for implementing embodiments of the invention.
FIG. 14 illustrates a method in accordance with some embodiments of the invention.
FIG. 15 illustrates a method in accordance with some embodiments of the invention.

DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

## Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

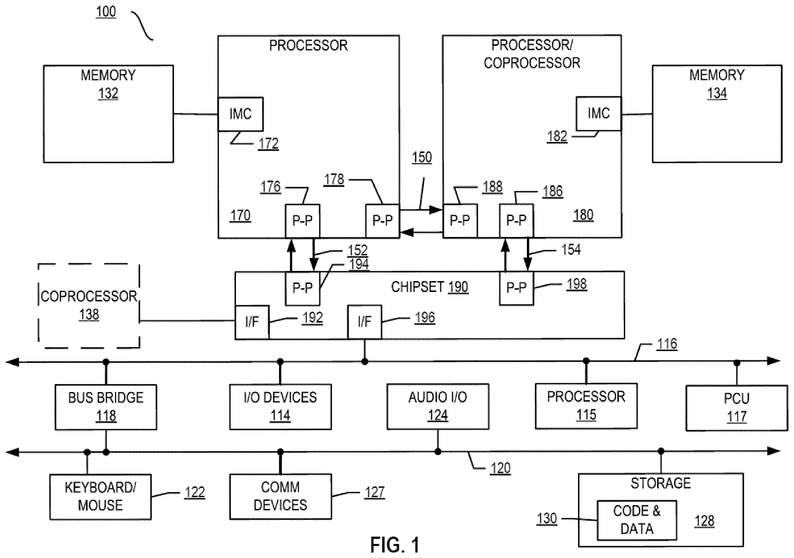

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

**Exemplary Core Architectures, Processors, and Computer Architectures**

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

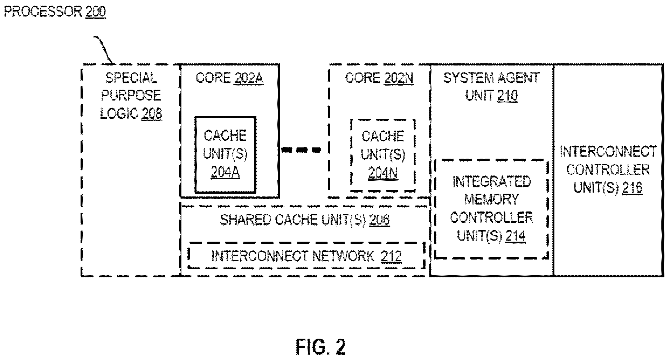

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

**Exemplary Core Architectures**

**In-order and out-of-order core block diagram**

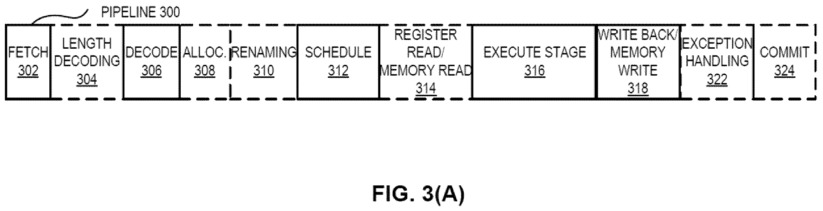

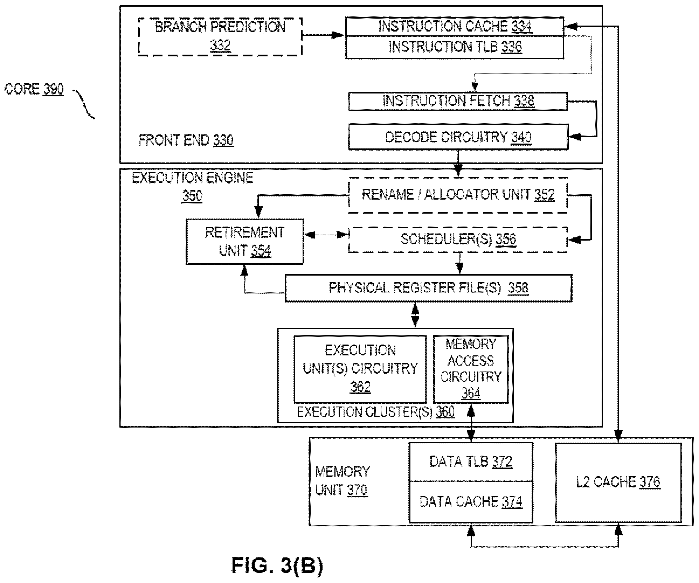

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A),** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

**Exemplary Execution Unit(s) Circuitry**

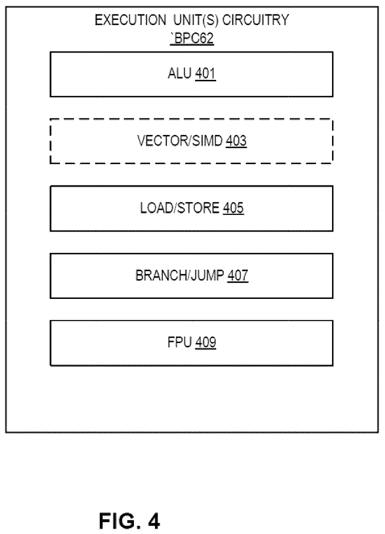

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

**Exemplary Register Architecture**

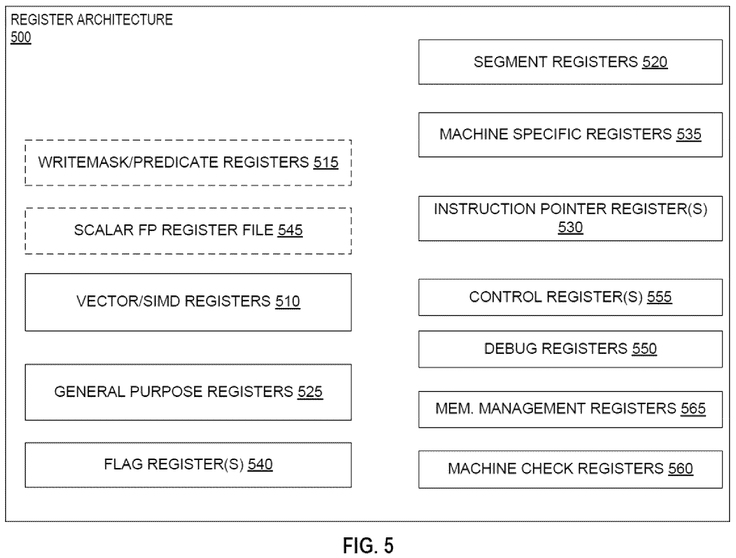

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

**Instruction** Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

**Exemplary Instruction Formats**

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

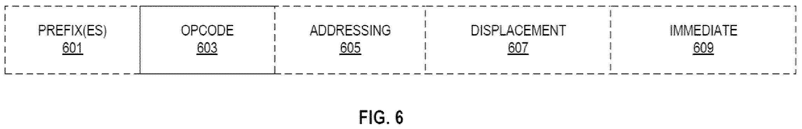

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

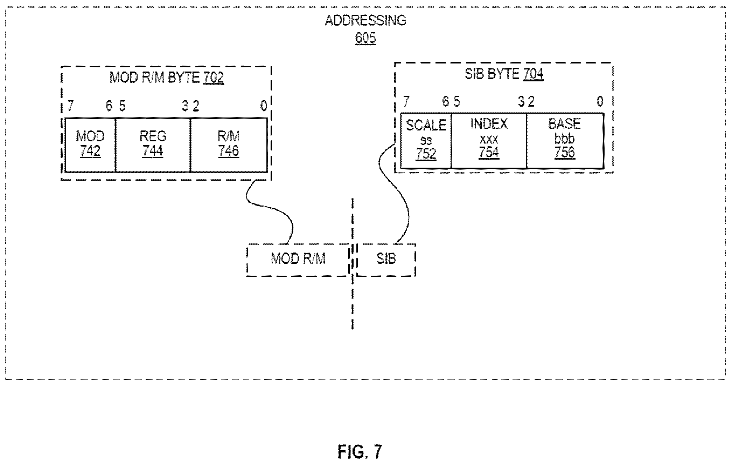

The addressing field 605 is used to address one or more operands of the instruction, such as a location in memory or one or more registers. **FIG. 7** illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses $2^{scale} * index + base$).

Some addressing forms utilize a displacement value to generate a memory address. For example, a memory address may be generated according to $2^{scale} * index + base + displacement$, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

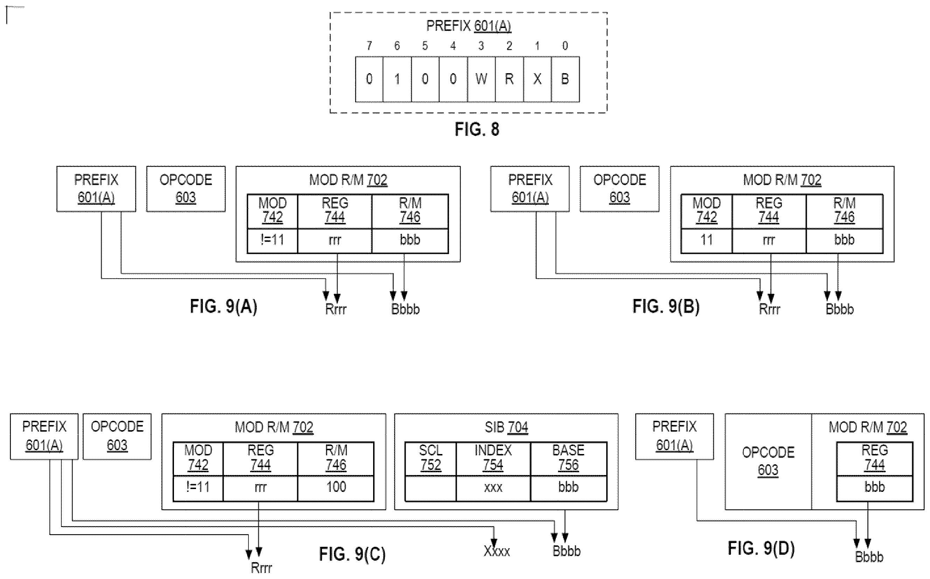

**FIG. 8** illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 ($2^4$) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

FIGS. 9(A)-(D) illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

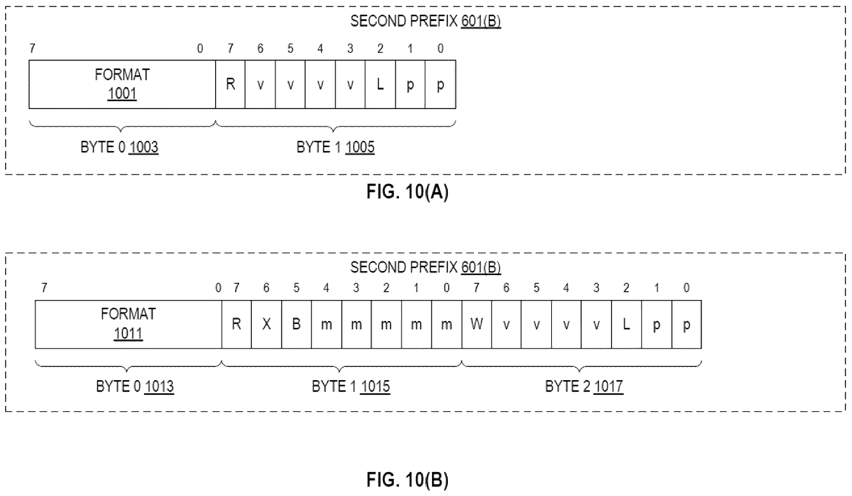

FIGS. 10(A)-(B) illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

FIG. 10(A) illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

FIG. 10(B) illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

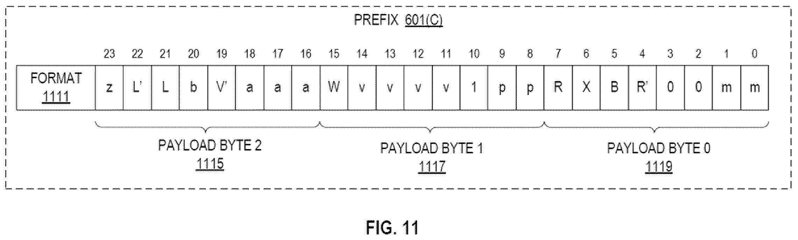

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG. 5**) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P [7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a nondestructive source syntax which can access an upper 16 vector registers using P[19]. P[20] encodes multiple functionalities, which differs across different classes of instructions and can affect the meaning of the vector length/ rounding control specifier field (P [22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1:** 32-Register Support in 64-bit Mode

|  | 4 | 3 | [2:0] | REG. TYPE | COMMON USAGES |
|---|---|---|---|---|---|
| **REG** | R' | R | ModR/M reg | GPR, Vector | Destination or Source |
| **VVVV** | V' | vvvv |  | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB. index | Vector | VSIB memory addressing |

**Table 2:** Encoding Register Specifiers in 32-bit Mode

|  | [2:0] | REG. TYPE | COMMON USAGES |
|---|---|---|---|
| **REG** | ModR/M reg | GPR, Vector | Destination or Source |
| **VVVV** | vvvv | GPR, Vector | 2nd Source or Destination |
| **RM** | ModR/M R/M | GPR, Vector | 1st Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3:** Opmask Register Specifier Encoding

|  | [2:0] | REG. TYPE | COMMON USAGES |
|---|---|---|---|
| **REG** | ModR/M Reg | k0-k7 | Source |
| **VVVV** | vvvv | k0-k7 | 2nd Source |
| **RM** | ModR/M R/M | k0-7 | 1st Source |
| **{k1}** | aaa | $k0^1$-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

**Emulation (including binary translation, code morphing, etc.)**

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

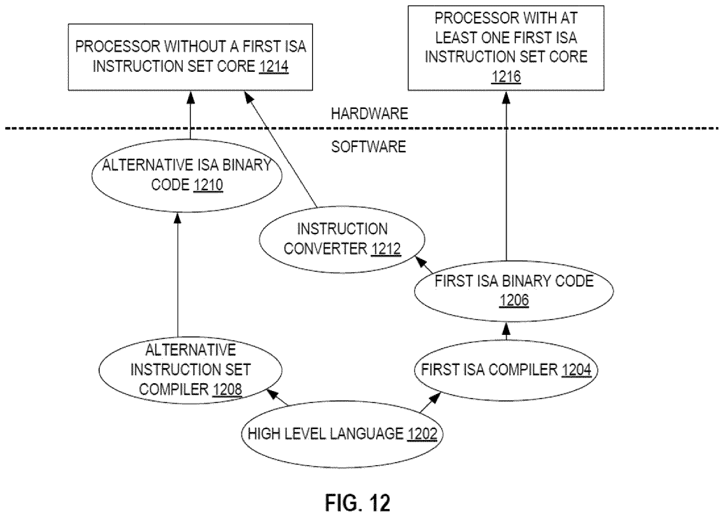

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel® processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

APPARATUS AND METHOD FOR INTELLIGENT CACHE

FLUSHING TO REDUCE POWER AND IMPROVE BATTERY LIFE

Determining whether to cause a functional block of a processor to enter into a sleep state involves a balance between the energy used for the transition and the power conserved during the sleep state. For example, to justify entry into a sleep state, the duration of the sleep state should be sufficient to recover the expended transition energy. When the transition energy and the conserved power are constant values, an evaluation may be performed to determine the sleep period that achieves a break-even point. However, this analysis becomes more complex when entering the sleep state requires a cache flush, which removes all currently-cached data from the cache. This data must subsequently be retrieved from memory if needed, resulting in additional power consumption.

Previous solutions typically decide when to flush the cache based on expected sleep time, and calibrating the "break even" point during testing while running a few workloads. However, these implementations ignore the occupancy of the relevant cache and the amount of data to be flushed. Because previous solutions ignore cache occupancy, these implementations average the cases where it is worth flushing the cache with cases where it is not worth flushing the cache, resulting in an underfit of the calibration.

In contrast, embodiments of the invention described herein determine whether to enter a sleep state based on an evaluation of the power usage associated with corresponding cache flush operations. For example, these embodiments address the limitations of existing architectures by dynamically determining whether to flush based on the cache's current state, using the parameters:

1. The number of modified (dirty) lines in the cache.
2. The number of valid lines in the cache.

By considering these variables for decisions related to sleep state entry, the implementations described herein reduce power consumption and improve battery life of the corresponding system based on more accurate heuristics for cache flush demotion operations (e.g., for the LLC). The terms "sleep state" and "low power state" are used interchangeably herein to refer to a state in which the core or functional circuit block is powered off or operating with reduced power.

The power associated with entering and exiting a sleep state is variable when a cache flush is required. The reasons for this complexity include (but are not limited to):

1. The energy and time needed to flush the cache can vary depending on whether the cache is full or empty.
2. Flushing data that will be accessed immediately after the sleep state means it will have to be reloaded into the cache, negating power savings with the subsequent energy cost of cache warming.
3. Reducing the cache hit rate later can also detract from performance and responsiveness, even with the power savings.

Embodiments of the invention evaluate the current state of the cache when determining whether to enter the sleep state and flush the cache. In some embodiments, the number of modified (dirty) lines in the cache and the number of valid lines in the cache are considered for this evaluation. Modified cache lines must be stored back to memory when flushed and valid cache lines must be reloaded into the cache from memory once flushed. Thus, the "modified" parameter considered by these embodiments indicates the number of lines which must be flushed and the associated energy cost. The "valids" parameter is used by these embodiments to estimate the number of missed cache hits when waking up from the sleep state. Although not exact, as future access cannot be predicted, the valids parameter can be used for a reliable estimate.

The following discussion relates to energy and power consumption which are different but related terms. Energy and power are used herein in accordance with their standard definitions - i.e., energy is the capacity to perform work while power is the rate at which the energy is consumed. For example, energy may be specified in Joules and power may be specified in Joules/second.

The equation for the break-even sleep time is:

$$sleep_i = \frac{transition_{energy}}{power\ while\ awake - power\ while\ asleep}$$

As used herein, the break-even sleep time is the minimum amount of time operation in a low power state is justified given the transition energy costs. At the break-even point, the energy consumed in an active state is equal to the energy consumed in the low power state. If a low power state can be maintained for a time greater than the break-even point, then entering into the low power state is justified from the perspective of energy savings.

With the inclusion of cache considerations in accordance with embodiments of the invention, the new energy equation becomes:

$$transition_i = transition_{energy} + flush_{energy}(modified) + warm_i(valids)$$

where $transition_{energy}$ is the energy consumed to enter and exit the sleep state, $flush_{energy}(modified)$ is the energy consumed flushing modified data to memory, and $warm_i(valids)$ is the estimated energy required to re-fill the cache with valid data requested following the sleep state.

If the power management architecture of the processor provides an option to enter a sleep state while keeping only the cache active, a trade-off emerges between three power states:

1. Power while awake;
2. Power while in the sleep state with the cache active (not flushed); and
3. Power while in the sleep state with the cache flushed and inactive.

This results in two new break-even sleep points:

$$sleep_i = \frac{transition_i}{power\ while\ awake - power\ while\ asleep\ with\ cache\ up}$$

And

$$sleep_i\ down = \frac{transition_i}{power\ while\ awake - power\ while\ asleep\ with\ cache\ down}$$

Given the anticipated sleep time for the processor component, some embodiments of the invention use the following analysis to make the determination:

(i) If current_sleep_time < sleep_time_break_even_cache_up, then do not enter the sleep state;
(ii) If sleep_time_break_even_cache_up < current_sleep_time < sleep_time_break_even_cache_down, then enter the sleep state but keep the cache up; and
(iii) If sleep_time_break_even_cache_down < current_sleep_time, then enter the sleep state and flush the cache.

Thus, according to (i) the sleep state will not be entered if the energy consumed in an active state for the estimated sleep time is less than the energy consumed in a first sleep state in which the cache remains powered (where no energy is lost due to flushing and repopulating the cache). According to (ii), the first sleep state will be entered (i.e., with the cache powered) if the energy consumed in the first sleep state is less than the energy consumed in the active state over the estimated sleep time and if the energy consumed in the active state over the estimated sleep time is less than the energy consumed in a second sleep state in which the cache is powered down. Finally, according to (iii), the second sleep state is entered in which the cache is flushed and powered down if the energy consumed in the second sleep state is less than the energy consumed in an active state for the estimated sleep time.

As mentioned, the estimates for the first and second sleep states may be generated based on the "modified" parameter (e.g., the estimated or determined number of lines which must be flushed and the associated energy cost) and the "valids" parameter (the estimated number of missed cache hits when waking up from the sleep state). The "valids" parameter also includes a performance impact which may be considered, but this involves a decision on the balance between power and performance, rather than a fixed calculation as described above.

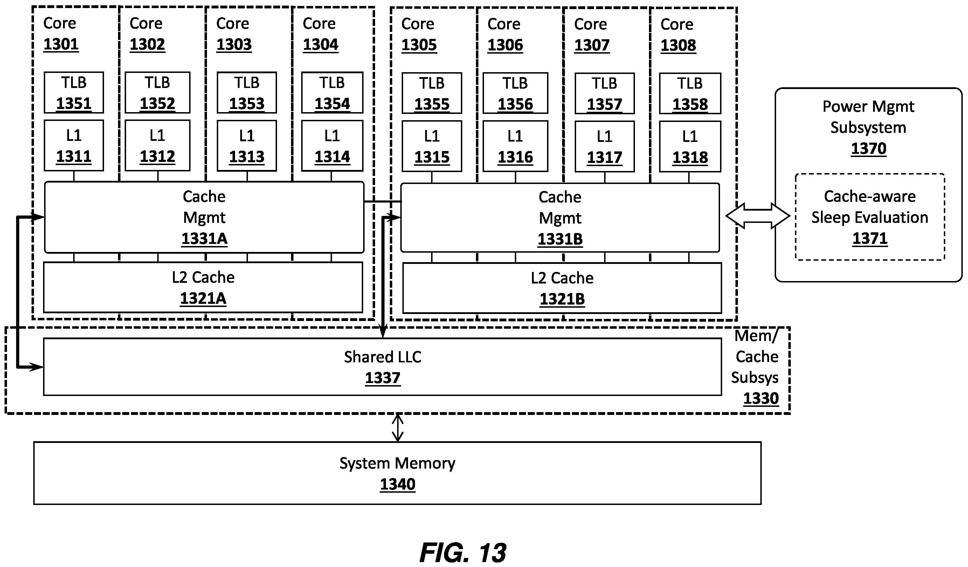

**Figure** 13 illustrates an example processor architecture for implementing embodiments of the invention which includes a plurality of cores 1301-1308, each with its own L1 cache 1351-1358 and L1 TLB 1351-1358, respectively. Cores 1301-1304 share a first L2 cache 1321 and cores 1305-1306 share a second L2 cache 1322. While this particular arrangement is shown for the purpose of illustration, the underlying principles of the invention are not limited to this particular cache subsystem. In other implementations, for example, each L2 cache may be shared with a larger number of cores (e.g., 8 cores, all cores, etc) or with fewer than four cores.

Cache management hardware logic 1331A-B manages access to the L2 cache 1321A-B and the memory/cache subsystem 1330 which includes a shared LLC (or "L3 cache"), shared by all processor cores 1301-1308, and provides access to system memory 1340 (e.g., which may be a DDR DRAM, HBM memory, etc).

A power management subsystem 1370 is configured with cache-aware sleep evaluation logic 1371 (e.g., implemented in hardware or executable power management firmware/software) to implement the techniques described herein. In particular, the cache-aware sleep evaluation logic 1371 may communicate with the cache management logic 1331A-B to determine the current state of the cachelines in the L2 caches 1321A-B and/or the shared LLC 1337. For example, the cache management logic 1331A-B may communicate the number or ratio of cachelines which are in a modified (dirty) and/or valid state. The cache-aware sleep evaluation logic 1371 then performs the evaluation as described above to determine whether entering a particular sleep state (e.g., with the cache on or off) will be justified. This evaluation may be performed with respect to the shared LLC 1337 and/or with respect to the individual L2 caches 1321A-B (e.g., to determine whether allowing a corresponding set of cores to enter a sleep state is worthwhile).

Note that various architectural details are not illustrated in **Figure** 13 to avoid obscuring the underlying principles of the invention. For example, although not shown, the processor architecture may include multiple levels of TLBs, and various types of control and data interconnections between the L1 cache, L2 cache, and shared LLC 1337. Moreover, the analysis described herein may be performed with respect to any cache within the cache hierarchy including, for example, the L1 caches 1311, L2 caches 1321A-B, shared LLC 1337, and/or the TLBs 1351-1358.

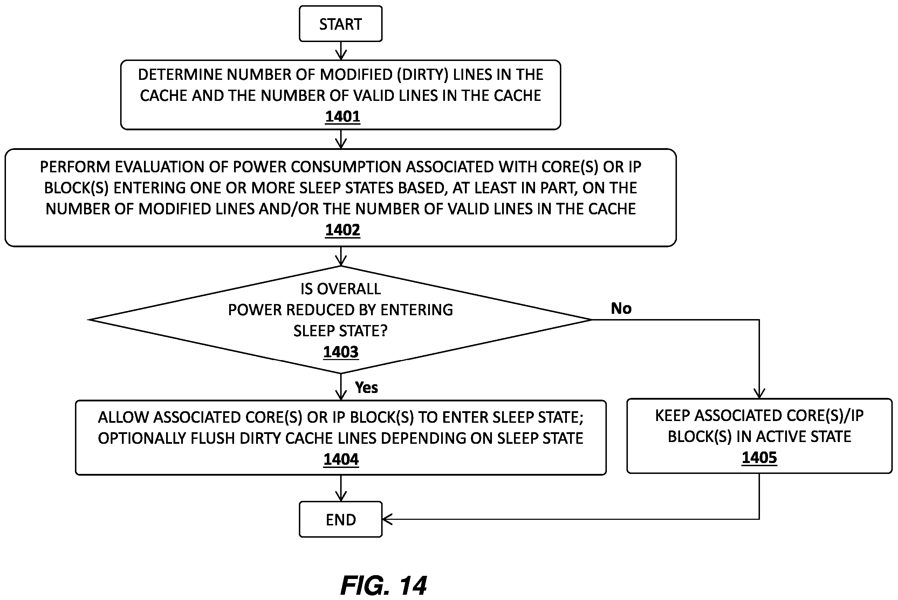

A method in accordance with embodiments of the invention is illustrated in **Figure** 14. The method may be implemented on the various architectures described herein, but is not limited to any particular processor or system architecture.

At 1401, the number of modified (dirty) cache lines and the number of valid lines in a given cache is determined or estimated. In these embodiments, the cache is associated with a core or IP block which is being considered for entering a sleep state (e.g., an L2 cache or the LLC or portion thereof). At 1402, an evaluation of power consumption is performed with respect to the core or IP block entering one or more sleep states based, at least in part, on the number of modified lines and/or the number of valid lines in the cache. In some implementations, there are at least two sleep states: one in which the cache contents are preserved and one in which the cache contents are flushed. The evaluation may include determining or estimating the power conserved when in the sleep states, the power required to flush modified cache lines from the cache, the power required to reload valid lines into the cache, and the sleep duration. For example, in some embodiments, no sleep state is entered if the current_sleep_time < sleep_time_break_even_cache_up; a first sleep state with the cache powered up is entered if sleep_time_break_even_cache_up < current_sleep_time < sleep_time_break_even_cache_down; and a second sleep state with the cache powered down is entered (with a cache flush operation) if sleep_time_break_even_cache_down < current_sleep_time.

Based on this evaluation, if overall power is reduced by entering one of the sleep states, determined at 1403, then at 1404, the associated core(s) or IP block(s) are allowed to enter the sleep state (e.g., either the first or the second sleep state, based on the evaluation). If not, then at 1405, the associated core(s) or IP block(s) are maintained in an active state.

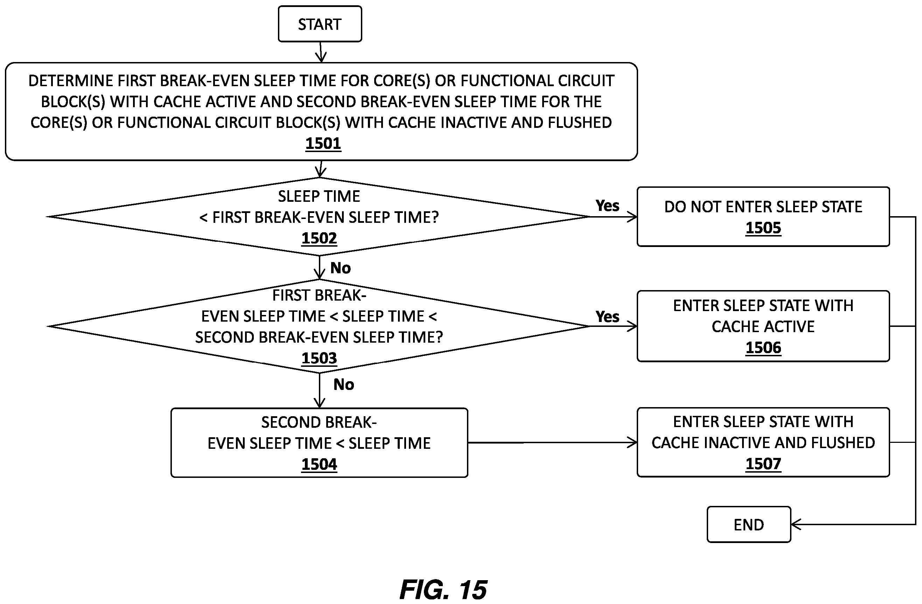

**Figure 15** illustrates a method in accordance with one embodiment. The method may be implemented on the various architectures described herein, but is not limited to any particular processor or system architecture.

At 1501, a first break-even sleep time is determined for core(s) or functional circuit block(s) with a corresponding cache active and second break-even sleep time is determined for the core(s) or functional circuit block(s) with the corresponding cache inactive and flushed.

At 1502, if the current sleep time (the expected sleep time when entering the sleep state) is less than the first break even sleep time, then no sleep state is entered at 1505. At 1503, if the first break-even sleep time is less than the current sleep time and the current sleep time is less than the second break-even sleep time, then the sleep state is entered with the cache in an active (and unflushed) state. At 1504, because the second break-even sleep time is less than the current sleep time, the sleep state is entered with the cache inactive and flushed at 1507.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

EXAMPLES

The following are example implementations of different embodiments of the invention.

Example 1. A processor, comprising: a plurality of cores, functional circuit blocks, or combinations thereof; a cache associated with at least a first core or functional circuit block of the plurality, the cache to store a plurality of cachelines including modified cachelines and valid cachelines; and a power controller to evaluate energy consumption associated with the first core or functional circuit block remaining in an active state, entering a first sleep state, or entering a second sleep state; the power controller to evaluate the energy consumption based, at least in part, on energy associated with flushing the plurality of cachelines when entering into the second sleep state, an expected sleep time, and power consumption of the first core or functional circuit block in the active state, the first sleep state, and the second sleep state; the power controller to cause the first core or functional circuit block to remain active, enter into the first sleep state, or enter into the second sleep state based on which results in a minimum energy consumption.

Example 2. The processor of example 1 wherein the plurality of cachelines are preserved in the first sleep state and are flushed in the second sleep state.

Example 3. The processor of examples 1 or 2 wherein the power controller is to evaluate the energy consumption based on power levels of the first sleep state, the second sleep state, and the active state, and energy consumption associated with flushing cachelines from the cache in the second sleep state.

Example 4. The processor of any of examples 1-3, wherein if an expected sleep time is less than a first break-even sleep time associated with the first sleep state, then the power controller is to cause the cores and/or functional circuit blocks to remain active.

Example 5. The processor of any of examples 1-4 wherein if the expected sleep time is greater than a first break-even sleep time and less than a second break-even sleep time associated with the second sleep state, then the power controller is to cause the cores and/or functional circuit blocks to enter the first sleep state.

Example 6. The processor of any of examples 1-5, wherein if the second break-even sleep time is less than the expected sleep time, then the power controller is to cause the cores and/or functional circuit blocks to enter the second sleep state.

Example 7. The processor of any of examples 1-6, wherein the first break-even sleep time comprises a first minimum sleep time to justify entering into the first sleep state and the second break-even sleep time comprises a second minimum sleep time to justify entering into the second sleep state.

Example 8. A method, comprising: evaluating, by a power controller of a processor, energy consumption associated with a first core or functional circuit block of the processor remaining in an active state, entering a first sleep state, or entering a second sleep state; wherein evaluating the energy consumption is based, at least in part, on energy associated with flushing a plurality of cachelines of a corresponding cache when entering into the second sleep state, an expected sleep time, and power consumption of the first core or functional circuit block in the active state, the first sleep state, and the second sleep state; and causing, based on the evaluating, the first core or functional circuit block to remain active, enter into the first sleep state, or enter into the second sleep state with a goal of reducing total energy consumption.

Example 9. The method of example 8 wherein the plurality of cachelines are preserved in the first sleep state and are flushed in the second sleep state.

Example 10. The method of examples 8 or 9 wherein the evaluating the energy consumption is based on power levels of the first sleep state, the second sleep state, and the active state, and energy consumption associated with flushing cachelines from the cache in the second sleep state.

Example 11. The method of any of examples 8-10, wherein if an expected sleep time is less than a first break-even sleep time associated with the first sleep state, then the power controller is to cause the cores and/or functional circuit blocks to remain active.

Example 12. The method of any of examples 8-11 wherein if the expected sleep time is greater than a first break-even sleep time and less than a second break-even sleep time associated with the second sleep state, then the power controller is to cause the cores and/or functional circuit blocks to enter the first sleep state.

Example 13. The method of any of examples 8-12, wherein if the second break-even sleep time is less than the expected sleep time, then the power controller is to cause the cores and/or functional circuit blocks to enter the second sleep state.

Example 14. The method of any of examples 8-13, wherein the first break-even sleep time comprises a first minimum sleep time to justify entering into the first sleep state and the second break-even sleep time comprises a second minimum sleep time to justify entering into the second sleep state.

Example 15. A machine-readable medium having program code stored thereon which, when executed by a processor, is to cause the processor to perform operations, comprising: evaluating, by a power controller of the processor, energy consumption associated with a first core or functional circuit block of the processor remaining in an active state, entering a first sleep state, or entering a second sleep state; wherein evaluating the energy consumption is based, at least in part, on energy associated with flushing a plurality of cachelines of a corresponding cache when entering into the second sleep state, an expected sleep time, and power consumption of the first core or functional circuit block in the active state, the first sleep state, and the second sleep state; and causing, based on the evaluating, the first core or functional circuit block to remain active, enter into the first sleep state, or enter into the second sleep state with a goal of reducing total energy consumption.

Example 16. The machine-readable medium of example 15 wherein the plurality of cachelines are preserved in the first sleep state and are flushed in the second sleep state.

Example 17. The machine-readable medium of examples 15 or 16 wherein the evaluating the energy consumption is based on power levels of the first sleep state, the second sleep state, and the active state, and energy consumption associated with flushing cachelines from the cache in the second sleep state.

Example 18. The machine-readable medium of any of examples 15-17, wherein if an expected sleep time is less than a first break-even sleep time associated with the first sleep state, then the power controller is to cause the cores and/or functional circuit blocks to remain active.

Example 19. The machine-readable medium of any of examples 15-18 wherein if the expected sleep time is greater than a first break-even sleep time and less than a second break-even sleep time associated with the second sleep state, then the power controller is to cause the cores and/or functional circuit blocks to enter the first sleep state.

Example 20. The machine-readable medium of any of examples 15-19, wherein if the second break-even sleep time is less than the expected sleep time, then the power controller is to cause the cores and/or functional circuit blocks to enter the second sleep state.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

**Claims**

1. A processor, comprising:

   a plurality of cores, functional circuit blocks, or combinations thereof;
   a cache associated with at least a first core or functional circuit block of the plurality, the cache to store a plurality of cachelines including modified cachelines and valid cachelines; and
   a power controller to evaluate at least one of energy and power consumption associated with the first core or functional circuit block remaining in an active state, entering a first sleep state, or
   entering a second sleep state;
   the power controller to evaluate the at least one of energy and power consumption based, at least in part, on energy associated with flushing the plurality of cachelines when entering into the second sleep state, an expected sleep time, and power consumption of the first core or functional circuit block in the active state, the first sleep state, and the second sleep state;
   the power controller to cause the first core or functional circuit block to remain active, enter into the first sleep state, or enter into the second sleep state based on which results in a minimum total energy consumption.

2. The processor of claim 1 wherein the plurality of cachelines are preserved in the first sleep state and are flushed in the second sleep state.

3. The processor of claim 2 wherein the power controller is to evaluate the at least one of energy and power consumption based on power levels of the first sleep state, the second sleep state, and the active state, and energy consumption associated with flushing cachelines from the cache in the second sleep state.

4. The processor of claim 3, wherein if an expected sleep time is less than a first break-even sleep time associated with the first sleep state, then the power controller is to cause the cores and/or functional circuit blocks to remain active.

5. The processor of claim 4 wherein if the expected sleep time is greater than a first break-even sleep time and less than a second break-even sleep time associated with the second sleep state, then the power controller is to cause the cores and/or functional circuit blocks to enter the first sleep state.

6. The processor of claim 5, wherein if the second break-even sleep time is less than the expected sleep time, then the power controller is to cause the cores and/or functional circuit blocks to enter the second sleep state.

7. The processor of any of claims 4 to 6, wherein the first break-even sleep time comprises a first minimum sleep time to justify entering into the first sleep state and the second break-even sleep time comprises a second minimum sleep time to justify entering into the second sleep state.

8. A method, comprising:

   evaluating, by a power controller of a processor, at least one of energy and power consumption associated with a first core or functional circuit block of the processor remaining in an active state, entering a first sleep state, or entering a second sleep state;

wherein evaluating the at least one of energy and power consumption is based, at least in part, on energy associated with flushing a plurality of cachelines of a corresponding cache when entering into the second sleep state, an expected sleep time, and power consumption of the first core or

functional circuit block in the active state, the first sleep state, and the second sleep state; and causing, based on the evaluating, the first core or functional circuit block to remain active, enter into the first sleep state, or enter into the second sleep state to minimize total energy consumption.

9. The method of claim 8 wherein the plurality of cachelines are preserved in the first sleep state and are flushed in the second sleep state.

10. The method of claim 9 wherein the evaluating the at least one of energy and power consumption is based on power levels of the first sleep state, the second sleep state, and the active state, and energy consumption associated with flushing cachelines from the cache in the second sleep state.

11. The method of claim 10, wherein if an expected sleep time is less than a first break-even sleep time associated with the first sleep state, then the power controller is to cause the cores and/or functional circuit blocks to remain active.

12. The method of claim 11 wherein if the expected sleep time is greater than a first break-even sleep time and less than a second break-even sleep time associated with the second sleep state, then the power controller is to cause the cores and/or functional circuit blocks to enter the first sleep state.

13. The method of claim 12, wherein if the second break-even sleep time is less than the expected sleep time, then the power controller is to cause the cores and/or functional circuit blocks to enter the second sleep state.

14. The method of any of claims 11 to 13, wherein the first break-even sleep time comprises a first minimum sleep time to justify entering into the first sleep state and the second break-even sleep time comprises a second minimum sleep time to justify entering into the second sleep state.

15. A machine-readable medium having program code stored thereon which, when executed by a processor, is to cause the processor to perform operations, comprising:

evaluating, by a power controller of the processor, at least one of energy and power consumption associated with a first core or functional circuit block of the processor remaining in an active state, entering a first sleep state, or entering a second sleep state;
wherein evaluating the energy consumption is based, at least in part, on energy associated with flushing a plurality of cachelines of a corresponding cache when entering into the second sleep state, an expected sleep time, and power consumption of the first core or functional circuit block in the active state, the first sleep state, and the second sleep state; and
causing, based on the evaluating, the first core or functional circuit block to remain active, enter into the first sleep state, or enter into the second sleep state to minimize total energy consumption.

FIG. 1

100

MEMORY 132 — IMC 172 — PROCESSOR 170

MEMORY 134 — IMC 182 — PROCESSOR/ COPROCESSOR 180

P-P 176 — 150 — P-P 178

P-P 188 — P-P 186

CHIPSET 190

P-P 194 / 152 / 192 — P-P 198 / 154 / 196

COPROCESSOR 138

I/F 196

I/F

BUS BRIDGE 118

I/O DEVICES 114

PROCESSOR 115

AUDIO I/O 124

PCU 117

116

120

KEYBOARD/ MOUSE 122

COMM DEVICES 127

STORAGE 128 — CODE & DATA 130

FIG. 2

PIPELINE 300

| FETCH 302 | LENGTH DECODING 304 | DECODE 306 | ALLOC. 308 | RENAMING 310 | SCHEDULE 312 | REGISTER READ/ MEMORY READ 314 | EXECUTE STAGE 316 | WRITE BACK/ MEMORY WRITE 318 | EXCEPTION HANDLING 322 | COMMIT 324 |

**FIG. 3(A)**

FIG. 3(B)

EP 4 625 112 A1

EXECUTION UNIT(S) CIRCUITRY
`BPC62

ALU 401

VECTOR/SIMD 403

LOAD/STORE 405

BRANCH/JUMP 407

FPU 409

**FIG. 4**

REGISTER ARCHITECTURE
500

SEGMENT REGISTERS 520

MACHINE SPECIFIC REGISTERS 535

WRITEMASK/PREDICATE REGISTERS 515

INSTRUCTION POINTER REGISTER(S) 530

SCALAR FP REGISTER FILE 545

CONTROL REGISTER(S) 555

VECTOR/SIMD REGISTERS 510

DEBUG REGISTERS 550

GENERAL PURPOSE REGISTERS 525

MEM. MANAGEMENT REGISTERS 565

FLAG REGISTER(S) 540

MACHINE CHECK REGISTERS 560

FIG. 5

EP 4 625 112 A1

| PREFIX(ES) 601 | OPCODE 603 | ADDRESSING 605 | DISPLACEMENT 607 | IMMEDIATE 609 |

FIG. 6

ADDRESSING
605

MOD R/M BYTE 702

| 7 | 6 5 | 3 2 | 0 |

| MOD 742 | REG 744 | R/M 746 |

SIB BYTE 704

| 7 | 6 5 | 3 2 | 0 |

| SCALE ss 752 | INDEX xxx 754 | BASE bbb 756 |

MOD R/M | SIB

FIG. 7

PREFIX 601(A)

| 7 | 6 | 5 | 4 | 3 | 2 | 1 | 0 |
|---|---|---|---|---|---|---|---|
| 0 | 1 | 0 | 0 | W | R | X | B |

FIG. 8

PREFIX 601(A)

OPCODE 603

MOD R/M 702

| MOD 742 | REG 744 | R/M 746 |
|---------|---------|---------|
| !=11 | rrr | bbb |

Rrrr

Bbbb

FIG. 9(A)

PREFIX 601(A)

OPCODE 603

MOD R/M 702

| MOD 742 | REG 744 | R/M 746 |
|---------|---------|---------|
| 11 | rrr | bbb |

Rrrr

Bbbb

FIG. 9(B)

PREFIX 601(A)

OPCODE 603

MOD R/M 702

| MOD 742 | REG 744 | R/M 746 |
|---------|---------|---------|
| !=11 | rrr | 100 |

SIB 704

| SCL 752 | INDEX 754 | BASE 756 |
|---------|-----------|----------|
|  | xxx | bbb |

Rrrr

Xxxx

Bbbb

FIG. 9(C)

PREFIX 601(A)

OPCODE 603

MOD R/M 702

| REG 744 |
|---------|
| bbb |

Bbbb

FIG. 9(D)

EP 4 625 112 A1

SECOND PREFIX 601(B)

| | 7 | ... | 0 | 7 | 6 | 5 | 4 | 3 | 2 | 1 | 0 |
|---|---|---|---|---|---|---|---|---|---|---|---|
| | FORMAT 1001 | | | R | v | v | v | v | L | p | p |

BYTE 0 1003      BYTE 1 1005

FIG. 10(A)

SECOND PREFIX 601(B)

| 7 | ... | 0 | 7 | 6 | 5 | 4 | 3 | 2 | 1 | 0 | 7 | 6 | 5 | 4 | 3 | 2 | 1 | 0 |
|---|---|---|---|---|---|---|---|---|---|---|---|---|---|---|---|---|---|---|
| FORMAT 1011 | | | R | X | B | m | m | m | m | m | W | v | v | v | v | L | p | p |

BYTE 0 1013      BYTE 1 1015      BYTE 2 1017

FIG. 10(B)

EP 4 625 112 A1

PREFIX 601(C)

| | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|
| FORMAT 1111 | z | L' | L | b | V' | a | a | a | W | v | v | v | v | 1 | p | p | R | X | B | R' | 0 | 0 | m | m |

PAYLOAD BYTE 2
1115

PAYLOAD BYTE 1
1117

PAYLOAD BYTE 0
1119

FIG. 11

FIG. 12

**FIG. 13**

```
                          ┌─────────────┐
                          │    START    │
                          └──────┬──────┘
                                 │
                                 ▼
   ┌──────────────────────────────────────────────────────────────┐
   │  DETERMINE NUMBER OF MODIFIED (DIRTY) LINES IN THE            │
   │  CACHE AND THE NUMBER OF VALID LINES IN THE CACHE             │
   │                          1401                                 │
   └──────────────────────────────┬───────────────────────────────┘
                                  │
                                  ▼
 ┌────────────────────────────────────────────────────────────────────┐
 │  PERFORM EVALUATION OF POWER CONSUMPTION ASSOCIATED WITH CORE(S) OR IP│
 │  BLOCK(S) ENTERING ONE OR MORE SLEEP STATES BASED, AT LEAST IN PART, ON THE│
 │  NUMBER OF MODIFIED LINES AND/OR THE NUMBER OF VALID LINES IN THE CACHE│
 │                              1402                                    │
 └────────────────────────────────┬───────────────────────────────────┘
                                   │
                                   ▼
```

IS OVERALL POWER REDUCED BY ENTERING SLEEP STATE? **1403**

No

Yes

ALLOW ASSOCIATED CORE(S) OR IP BLOCK(S) TO ENTER SLEEP STATE; OPTIONALLY FLUSH DIRTY CACHE LINES DEPENDING ON SLEEP STATE **1404**

KEEP ASSOCIATED CORE(S)/IP BLOCK(S) IN ACTIVE STATE **1405**

END

*FIG. 14*

FIG. 15

EP 4 625 112 A1

## EUROPEAN SEARCH REPORT

Application Number

EP 25 15 9416

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/185801 A1 (ARORA MANISH [US] ET AL) 2 July 2015 (2015-07-02) * paragraphs [0013], [0017], [0018], [0019], [0020], [0023], [0024], [0045], [0046], [0050], [0054], [0057]; figure 8 * ----- | 1-15 | INV. G06F1/3225 G06F1/3234 G06F1/3287 |

**TECHNICAL FIELDS SEARCHED (IPC)**

G06F

The present search report has been drawn up for all claims

| Place of search | Date of completion of the search | Examiner |
|---|---|---|
| The Hague | 20 June 2025 | Ghiette, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9416

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | Publication date | Patent family member(s) | Publication date |
|---|---|---|---|
| US 2015185801 A1 | 02-07-2015 | NONE | |